# EUROPEAN PATENT SPECIFICATION

(11) **EP 3 495 080 B1**
(45) Date of publication and mention of the grant of the patent: **06.07.2022**
(21) Application number: 17206320.8
(22) Date of filing: 11.12.2017
(51) Int. Cl.: B23B 31/00, B23B 31/11, B23B 51/00, B23B 51/12

(54) **A TOOL BODY ASSEMBLY, A TOOL ASSEMBLY AND A MACHINE**
EINE WERKZEUGKÖRPERANORDNUNG, EINE WERKZEUGANORDNUNG UND EINE MASCHINE
UN ENSEMBLE CORPS D'OUTIL, UN ENSEMBLE OUTIL ET UNE MACHINE

(43) Date of publication of application: 12.06.2019
(73) Proprietor: Sandvik Intellectual Property AB, 811 81 Sandviken (SE)
(72) Inventor: AARE, Magnus, SE-811 52 Sandviken (SE)
(74) Representative: Sandvik

(56) References cited:
- EP-A1- 1 990 113
- US-A1- 2005 161 263

## Description

### TECHNICAL FIELD OF THE INVENTION

The present invention relates to a tool body assembly for use in a tool assembly configured for chip-removing machining of a workpiece, to a tool assembly, and to a machine for chip-removing machining of a rotating workpiece. In particular, but not exclusively, the invention relates to a tool body assembly suitable for use in a machine such as a lathe, which machine is configured for chip-removing machining of a rotating workpiece. The tool body assembly, the tool assembly and the machine according to the invention are primarily intended for chip-removing machining of metallic workpieces.

### BACKGROUND OF THE INVENTION AND PRIOR ART

EP 1 990 113 A1 discloses a tool body assembly according to the preamble of claim 1.

Tools comprising a drilling tool body equipped with indexable cutting inserts are normally used in drilling operations, wherein the tool is rotated about its centre axis and simultaneously fed along this axis toward/into a stationary workpiece, or wherein the workpiece is rotated and the tool is fixed for rotation in a holder. Such tools may sometimes also be used for other machining operations of a rotating workpiece, such as in a boring operation widening an internal diameter of a machined hole, or in a turning operation removing material from an external surface of the workpiece. Multi-purpose tools that may be used in a drilling operation as well as in subsequent boring and threading operations are also known. An example of such a multi-purpose tool is disclosed in WO2008/088264. The tool has a centre and a peripheral cutting insert, wherein the peripheral cutting insert is used for drilling as well as for boring. Furthermore, a cutting insert for threading is provided.

When a drilling tool is to be used for single-point machining of a rotating workpiece, the drilling tool body may be fastened to a non-rotatable holder of a lathe. The lathe is usually movable in a longitudinal feeding direction, i.e. along the centre axis of the tool body, and in a transverse feeding direction perpendicular to the centre axis. In a boring operation, the workpiece is rotated while the tool is consecutively advanced and retreated in the longitudinal feeding direction and advanced in the transverse feeding direction, so that a peripheral cutting edge of the tool actively removes material from a periphery of the hole when the tool is advanced in the longitudinal feeding direction, thereby widening the hole. By rotating the tool 180° with respect to the holder, the transverse feeding direction can be reversed, using the same peripheral cutting edge for machining.

In a machining operation with a rotating tool, the orientation of the edges with respect to a transverse feeding direction is continuously changing and is therefore irrelevant. However, when a tool adapted for drilling is mounted in a lathe and used for single-point machining, such as in a boring operation, the alignment of the peripheral cutting edge in, or essentially in, the transverse feeding direction is crucial for the quality of the hole. Alignment of the tool when changing tools and/or reorienting the tool to reverse the transverse feeding direction can therefore be time consuming.

### SUMMARY OF THE INVENTION

It would be desirable to, in at least some aspect, facilitate mounting of a drilling tool body which is to be used for single-point machining of a rotating workpiece. In particular, it would be desirable to facilitate alignment of a peripheral cutting edge of a drilling tool which is to be used for single-point machining of a rotating workpiece with a transverse feeding direction of the tool. To better address these concerns, a tool body assembly according to claim 1, a tool assembly according to claim 9 and a machine according to claim 10 are provided. The tool body assembly according to the invention comprises:
- a drilling tool body having a front end and a rear end between which a centre axis and a peripheral envelope surface extend, wherein at least one peripheral insert seat for mounting of a peripheral cutting insert and at least one centre insert seat for mounting of a centre cutting insert are provided in the front end,
- a coupling member having a first end configured for engagement with the rear end of the drilling tool body, and a second end configured to be fastened to a holder of a machine,
- at least one securing member configured to prevent axial motion of the drilling tool body with respect to the coupling member,
- torque transfer means configured to transmit torque between the coupling member and the drilling tool body, wherein the torque transfer means are positioned to allow fastening of the drilling tool body to the coupling member in one of totally two available rotational positions separated by 180°.

The tool assembly according to the invention comprises:
- the proposed tool body assembly of claim 1,
- at least one peripheral cutting insert mounted in the at least one peripheral insert seat, and
- at least one centre cutting insert mounted in the at least one centre insert seat.

The machine for chip-removing machining of a rotating workpiece according to the invention comprises:
- the proposed tool assembly,
- a holder configured to hold the coupling member in a fixed orientation, wherein the holder is movable with respect to the workpiece at least in a longitudinal feeding direction and in a transverse feeding direction,
wherein, when the tool assembly is mounted to the holder in the fixed orientation, a peripheral cutting edge of the at least one peripheral cutting insert extends along the transverse feeding direction.

The drilling tool body will in the following also be referred to as "the tool body". "A tool" is to be understood as a tool body having cutting inserts mounted in the insert seats.

By positioning the torque transfer means so that the drilling tool body, hereinafter also referred to as the tool body, can only be fastened to the coupling member in one of two rotational positions separated by 180°, it is ensured that the cutting edges of the tool will always be oriented in one of two ways with respect to the coupling member. This facilitates using the tool body assembly in single-point machining operations such as boring and turning, in which the tool body assembly is mounted in a non-rotating holder and an active peripheral cutting edge needs to be aligned with a transverse feeding direction of the tool. In particular, it facilitates changing of tool bodies. If the machine is aligned using a tool body assembly with a first tool body so that the peripheral cutting edge extends along the transverse feeding direction, the tool body assembly may thereafter be removed from the holder, and the first tool body may be exchanged for a second tool body having the same kind of force transfer means. When the tool body assembly including the second tool body is fastened to the holder, the peripheral cutting edge of the second tool body is automatically aligned in the transverse feeding direction. Likewise, if the first tool body is removed from the coupling member, rotated 180° about the centre axis and thereafter fastened again to the coupling member, the peripheral cutting edge is automatically aligned for use in the opposite transverse feeding direction. Thus, alignment of the peripheral cutting edge of a cutting insert mounted in the tool body with a transverse feeding direction of the tool is facilitated.

It is to be understood that the coupling member should preferably be configured to be fastened to the holder of the machine, e.g. a lathe, in a fixed orientation. The coupling member should for this purpose comprise means for positioning it in a fixed orientation with respect to the holder.

Of course, either one of the holder of the machine and the workpiece may be movable to achieve a relative movement of the holder with respect to the workpiece.

According to the invention, the rear end of the drilling tool body comprises a male engagement member extending along the centre axis, and wherein the first end of the coupling member comprises a female engagement member configured to receive the male engagement member of the drilling tool body. This configuration is preferable to achieve a desired strength of the tool body and for achieving an efficient duct system for providing liquid coolant to cutting edges at the front end of the tool. Of course, it may instead be possible to provide the tool body with a female engagement member at its rear end, and provide the first end of the coupling member with a corresponding male engagement member.

According to the invention, a protruding flange is formed between the male engagement member and the front end of the drilling tool body, and the securing member is an annular securing member configured to be mounted around the flange of the drilling tool body and be securely engaged with the first end of the coupling member when the male engagement member is received in the female engagement member. In this embodiment, the securing member is configured to make contact with the flange such that axial motion of the tool body with respect to the coupling member is prevented. The securing member may e.g. be configured to be engaged with the first end of the coupling member by means of threaded engagement. This is an efficient way of securing the tool body in the axial direction.

According to one preferable embodiment, the torque transfer means comprise pins, and a first set of recesses configured to receive a front end of the pins are provided in the rear end of the drilling tool body and a second set of recesses configured to receive a rear end of the pins are provided in the first end of the coupling member. The pins may be formed of a different material than the tool body and the coupling member, and may thereby be tailored to have suitable mechanical properties. This kind of torque transfer means also offer a high precision and are relatively easy to provide, since the recesses can be made with a circular cross section using standard machining operations.

According to one preferable embodiment, the pins are fixedly fitted in one of the sets of recesses and the pins are configured to be releasably received in the other one of the sets of recesses. For example, the pins can be press fitted or shrink fitted in one of the sets of recesses. Having the pins fixedly mounted facilitates mounting of the tool body to the coupling member.

According to one preferable embodiment, the pins are fixedly fitted in the second set of recesses, i.e. on the first end of the coupling member. This is usually more material efficient, since the same coupling member can be used with various tool bodies.

According to one preferable embodiment, the torque transfer means comprise at least four pins. This improves the rigidity and strength of the torque transfer means.

According to one preferable embodiment, the torque transfer means comprise four pins that together form the four corners of an imaginary oblong. The imaginary oblong is preferably centred on the centre axis, i.e. all pins are located at the same radial distance from the centre axis. With this configuration of the torque transfer means, it is easy to intuitively understand which the two available rotational positions are.

According to one preferable embodiment, the torque transfer means comprise four pins, wherein a first pair of opposite pins are located at a first radial distance from the centre axis and wherein a second pair of opposite pins are located at a second radial distance from the centre axis, wherein the second radial distance is different from the first radial distance. This is an alternative to the oblong shape.

According to one preferable embodiment, the first set of recesses are formed in a peripheral rim of the flange. This facilitates engagement of the rear end of the tool body with the coupling member, since the recesses are clearly visible during mounting. Furthermore, the peripheral positioning improves the torque transfer.

The proposed tool assembly may comprise one or more additional cutting inserts apart from the centre cutting insert and the peripheral cutting insert. For example, the tool assembly may comprise a threading, grooving, step and/or chamfer cutting insert.

Further advantageous features and advantages of the invention will appear from the following detailed description.

### BRIEF DESCRIPTION OF THE DRAWINGS

Embodiments of the invention will in the following be described by means of example with reference to the appended drawings, in which:
- Fig. 1: is a perspective view of a tool assembly according to an embodiment,
- Fig. 2: is an exploded perspective view of the tool assembly in fig. 1,
- Fig. 3: is a partially sectional side view of the tool assembly in fig. 1,
- Fig. 4: is a first end view of a coupling member of the tool assembly in fig. 1,
- Fig. 5: is a rear end view of a tool body of the tool assembly in fig. 1,
- Figs. 6a-c: show drilling in a stationary workpiece using the tool assembly in fig. 1, and
- Figs. 7a-c: show boring in a rotating workpiece using the tool assembly in fig. 1.

### DETAILED DESCRIPTION OF EMBODIMENTS OF THE INVENTION

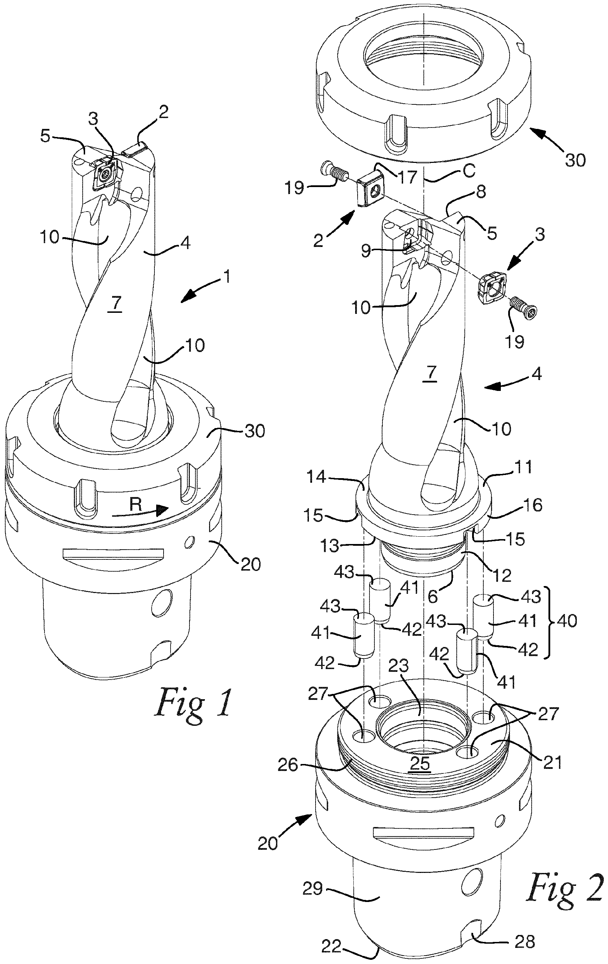

A tool assembly 1 according to an embodiment of the invention is shown in figs. 1-3. The tool assembly 1 is configured to be mounted in a holder of a machine (not shown) and be used on one hand in drilling operations, and on the other hand in boring and/or turning operations. The tool assembly 1 comprises a tool body assembly, a peripheral cutting insert 2, and a centre cutting insert 3, wherein a tool body 4 of the tool body assembly together with the cutting inserts 2, 3 form a tool. The tool assembly is rotatable in a direction R about a centre axis C.

The tool body 4 is a drilling tool body having a front end 5 and a rear end 6 between which a peripheral envelope surface 7 extends. A peripheral insert seat 8 for mounting of the peripheral cutting insert 2 and a centre insert seat 9 for mounting of the centre cutting insert 3 are provided in the front end 5 of the tool body 4. Two helical chip flutes 10 extend rearward from the insert seats 8, 9 toward a protruding flange 11. Rearward of the protruding flange 11, at the rear end 6 of the tool body 4, a male engagement member 12 centred on and extending along the centre axis C is provided.

A coupling member 20 to which the tool body 4 can be attached is also provided. In the shown embodiment, the coupling member has a basic shape of a coupling member used in a machine tool interface sold under the trade name Coromant Capto^{®}. The coupling member 20 extends along the centre axis C from a first end 21 to a second end 22. The first end 21 is configured to engage with the rear end 6 of the tool body 4. For this purpose, the first end 21 of the coupling member 20 comprises a female engagement member 23 in the form of a central cavity, configured to receive the male engagement member 12 of the tool body 4. The female engagement member 23 forms part of a central duct 24 extending through the coupling member 20, enabling supply of coolant to cooling channels within the tool body 4.

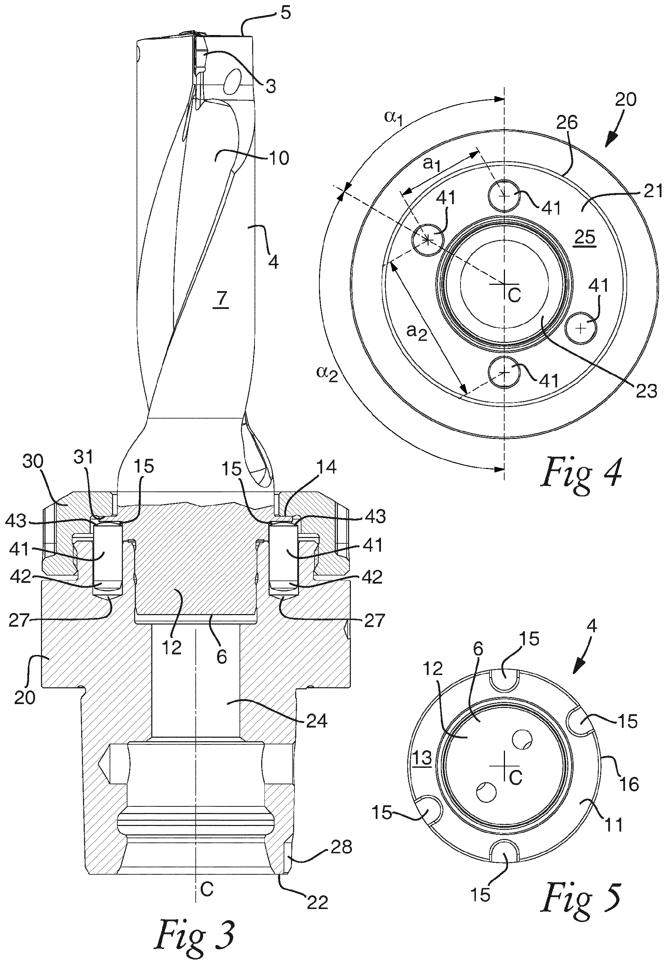

A first end surface 25 of the coupling member 20 is configured to make contact with a rear contact surface 13 of the flange 11 of the tool body 4 as the tool body 4 and the coupling member 20 are assembled. The surfaces 25, 13 are clearly seen in figs. 4 and 5, respectively, wherein fig. 4 shows a first end view of the coupling member 20 and fig. 5 shows a rear end view of the tool body 4. An externally threaded section 26 extends rearward from the first end surface 25.

At the second end 22 of the coupling member 20, a tapered hollow tri-polygon shank 29 for fastening the coupling member to a holder of a machine in a fixed orientation is provided. The shank 29 extends along the centre axis C and is configured to transfer torque between the coupling member and the holder via a peripheral surface of the shank 29. A recess 28 for receiving a protruding positioning member of the holder (not shown) is also provided, so that the coupling member 20 can only be fastened to the holder in one orientation.

An annular securing member 30 configured to prevent axial motion of the drilling tool body 4 with respect to the coupling member 20 is furthermore provided. The securing member 30 is configured to be mounted around the flange 11 of the tool body 4 and be securely engaged with the first end 21 of the coupling member 20 when the male engagement member 12 is received in the female engagement member 23. For this purpose, the securing member 30 is internally threaded. An inner contact surface 31 of the securing member 30 is configured to press against a front contact surface 14 of the flange so that relative axial motion of the tool body 4 and the coupling member 20 is prevented.

The tool body assembly further comprises torque transfer means 40 configured to transmit torque between the coupling member 20 and the tool body 4 in an interface between the tool body 4 and the coupling member 20. The torque transfer means 40 comprise four cylindrical pins 41, wherein rear ends 42 of the pins 41 are fixedly fitted into recesses 27 formed in the first end surface 25 of the coupling member 20. Front ends 43 of the pins 41 are configured to be releasably received in corresponding recesses 15 formed in the rear contact surface 13 of the flange 11. The recesses 15 are distributed around a peripheral rim 16 of the flange 11, i.e. the recesses 15 are formed in a transition between the rim 16 and the rear contact surface 13.

The fixed pins 41 and the recesses 15 in the flange 11 are positioned to allow fastening of the tool body 4 to the coupling member 20 in one of totally two available rotational positions separated by 180° about the centre axis C. In the shown embodiment, this has been accomplished by positioning the pins 41 as four corners of an imaginary oblong centred on the centre axis C, wherein the oblong has a short side with a length a₁ and a long side with a length a₂. In other words, the pins 41 are positioned with two different angular separations. In the shown embodiment, the pins have been positioned at 0°, 60°, 180° and 240°, i.e. with a first angular separation α₁ of 60° for two pins 41 separated by the distance a₁ and a second angular separation α₂ of 120° for two pins 41 separated by the distance a₂. The angular separations may of course be varied, but should be selected so that the two sides of the imaginary oblong can easily be distinguished for allowing intuitive mounting of the tool body 4 to the coupling member 20.

The fixed pins 41 are positioned so that a section in a plane containing the centre axis C and the recess 28 also cuts through two of the pins 41, positioned at opposite corners, such as shown in fig. 3. A peripheral cutting edge 17 of the peripheral cutting insert 2 thereby extends in a perpendicular or essentially perpendicular direction to a plane of the section.

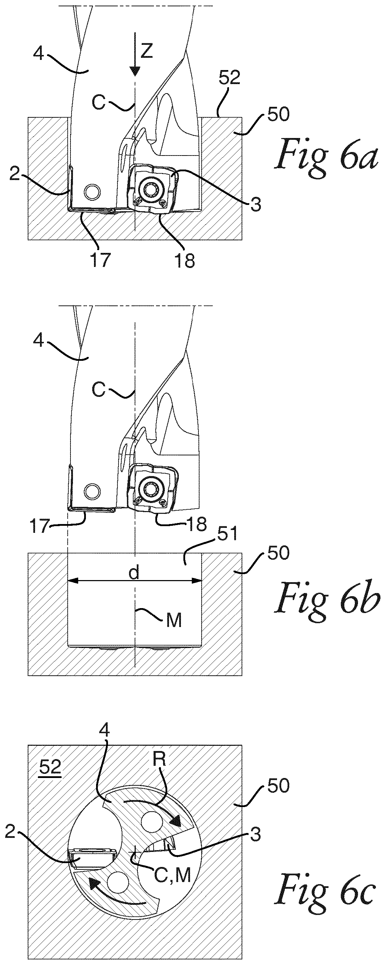

Figs. 6a-c shows the tool assembly 1 used for drilling in a workpiece 50, wherein figs. 6a-b are side views with the workpiece in a sectional view, and fig. 6c is a top view with the tool body 4 shown in cross section. The tool assembly 1 is fastened to a spindle of a machine (not shown), rotating the tool body 4 about the centre axis C in a direction R while feeding the tool forward in a longitudinal feeding direction Z parallel with the centre axis C, toward the workpiece 50. Alternatively, the workpiece 50 is fed toward the tool. It is also possible to rotate the workpiece 50 instead of the tool body 4. The peripheral cutting edge 17 of the peripheral cutting insert 2 and a centre cutting edge 18 of the centre cutting insert 3 together drills a hole 51 with an inner diameter d in an upper surface 52 of the workpiece 50. The hole 51 has a centre axis M coinciding with the centre axis C of the tool body 4.

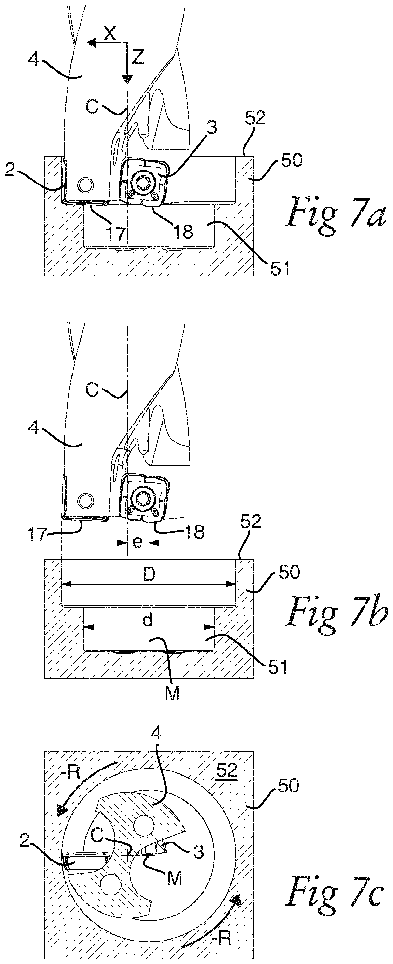

Fig. 7a-c shows the tool assembly 1 used in a boring operation widening the hole 51 in the workpiece 50, wherein figs. 7a-b are side views with the workpiece in a sectional view, and fig. 7c is a top view with the tool body 4 shown in cross section. In this operation, the workpiece is rotated about the axis M in the negative direction -R, while the tool assembly 1 is fixed in a non-rotating holder of a lathe, with the peripheral cutting edge 17 extending along a transverse feeding direction X, i.e. a direction perpendicular to the longitudinal feeding direction Z. Prior to machining, the tool body 4 is displaced along the transverse feeding direction X by a distance e from the centre axis M of the hole 51. The tool is thereafter fed in the longitudinal feeding direction Z while rotating the workpiece in the negative direction -R about the axis M. The hole 51 is thereby widened to an inner diameter D=d+2e. In the boring operation, only the peripheral cutting edge 17 is active, while the centre cutting edge 18 is inactive.

After removal of the tool assembly 1 from the holder of the lathe, the securing member 30 can be removed and the tool body 4 demounted from the coupling member 20. The tool body 4 may thereafter, thanks to the positioning of the force transfer means 40, easily be rotated 180° about the centre axis C and remounted to the coupling member. When the tool assembly 1 is again attached to the holder of the lathe, the peripheral cutting edge 17 still extends along the transverse feeding direction X, but the tool assembly 1 is now configured to be displaced in the negative feeding direction -X with respect to the workpiece 50.

The cutting inserts 2, 3 are in the shown embodiment indexable cutting inserts which are detachably mounted in the insert seats 8, 9 of the tool body 4, using fastening means 19 in the form of screws. The configurations of the fastening means and of the cutting inserts may of course be varied as easily recognized by a person skilled in the art. Moreover, the number of cutting inserts may be varied. For example, the tool body may be provided with an insert seat configured to receive a cutting insert for threading applications.

The coupling member may of course be of another type than the above described coupling member. For example, the coupling member may be of HSK type, Varilock type, or taper type.

The tool assembly may also be used in turning applications, i.e. for external machining of a rotating workpiece.

The invention is of course not limited to the embodiments disclosed, but may be varied and modified within the scope of the following claims.

## Claims

1. A tool body assembly for use in a tool assembly configured for chip-removing machining of a workpiece (50), the tool body assembly comprising:
- a drilling tool body (4) having a front end (5) and a rear end (6) between which a centre axis (C) and a peripheral envelope surface (7) extend, wherein at least one peripheral insert seat (8) for mounting of a peripheral cutting insert (2) and at least one centre insert seat (9) for mounting of a centre cutting insert (3) are provided in the front end (5),
- a coupling member (20) having a first end (21) configured for engagement with the rear end (6) of the drilling tool body (4), and a second end (22) configured to be fastened to a holder of a machine, wherein the rear end (6) of the drilling tool body (4) comprises a male engagement member (12) extending along the centre axis (C), and wherein the first end (21) of the coupling member (20) comprises a female engagement member (23) configured to receive the male engagement member (12) of the drilling tool body (4),
- at least one securing member (30) configured to prevent axial motion of the drilling tool body (4) with respect to the coupling member (20), and
- torque transfer means (40) configured to transmit torque between the coupling member (20) and the drilling tool body (4),
**characterised in that**
the torque transfer means (40) are positioned to allow fastening of the drilling tool body (4) to the coupling member (20) in one of totally two available rotational positions separated by 180°, **in that** a protruding flange (11) is formed between the male engagement member (12) and the front end (5) of the drilling tool body (4), and **in that**
the securing member (30) is an annular securing member configured to be mounted around the flange (11) of the drilling tool body (4) and be securely engaged with the first end (21) of the coupling member (20) when the male engagement member (12) is received in the female engagement member (23).

2. The tool body assembly according to claim 1, wherein the torque transfer means (40) comprise pins (41), and wherein a first set of recesses (15) configured to receive a front end (43) of the pins (41) are provided in the rear end (6) of the drilling tool body (4) and wherein a second set of recesses (27) configured to receive a rear end (42) of the pins (41) are provided in the first end (21) of the coupling member (20).

3. The tool body assembly according to claim 2, wherein the pins (41) are fixedly fitted in one of the sets of recesses (15, 27) and wherein the pins (41) are configured to be releasably received in the other one of the sets of recesses (15, 27).

4. The tool body according to claim 3, wherein the pins (41) are fixedly fitted in the second set of recesses (27).

5. The tool body assembly according to any one of claims 2-4, wherein the torque transfer means (40) comprise at least four pins (41).

6. The tool body assembly according to any one of claims 2-4, wherein the torque transfer means (40) comprise four pins (41) that together form the four corners of an imaginary oblong.

7. The tool body assembly according to any one of claims 2-4, wherein the torque transfer means (40) comprise four pins, wherein a first pair of opposite pins are located at a first radial distance from the centre axis (C) and wherein a second pair of opposite pins are located at a second radial distance from the centre axis (C), wherein the second radial distance is different from the first radial distance.

8. The tool body assembly according to any one of claims 3-7, wherein the first set of recesses (15) are formed in a peripheral rim (16) of the flange (11).

9. A tool assembly (1) for chip-removing machining, comprising:
- a tool body assembly according to any one of the preceding claims,
- at least one peripheral cutting insert (2) mounted in the at least one peripheral insert seat (8), and
- at least one centre cutting insert (3) mounted in the at least one centre insert seat (9).

10. A machine for chip-removing machining of a rotating workpiece, wherein the machine comprises:
- a tool assembly (1) according to claim 9,
- a holder configured to hold the coupling member (20) in a fixed orientation, wherein the holder is movable with respect to the workpiece at least in a longitudinal feeding direction (Z) and in a transverse feeding direction (X),
wherein, when the tool assembly (1) is mounted to the holder in the fixed orientation, a peripheral cutting edge (17) of the at least one peripheral cutting insert (2) extends along the transverse feeding direction (X).

## Patentansprüche

1. Werkzeugkörperanordnung zur Verwendung in einer Werkzeuganordnung, die zur spanabhebenden Bearbeitung eines Werkstücks (50) eingerichtet ist, wobei die Werkzeugkörperan-ordnung folgendes aufweist:
- einen Bohrwerkzeugkörper (4) mit einem vorderen Ende (5) und einem hinteren Ende (6), zwischen denen sich eine zentrale Achse (C) und eine periphere Mantelfläche (7) erstrecken, wobei an dem vorderen Ende (5) wenigstens ein peripherer Einsatzsitz (8) zum Montieren eines peripheren Schneideinsatzes (2) und wenigstens ein zentraler Einsatzsitz (9) zum Montieren eines zentralen Schneideinsatzes (3) vorgesehen sind,
- ein Kopplungsteil (20), welches ein erstes Ende (21) aufweist, das für den Eingriff mit dem hinteren Ende (6) des Bohrwerkzeugkörpers (4) eingerichtet ist, und ein zweites Ende (22), das zum Befestigen an einem Halter einer Maschine eingerichtet ist, wobei das hintere Ende (6) des Bohrwerkzeugkörpers (4) ein männliches Eingriffsmittel (12) aufweist, welches sich entlang der zentralen Achse (C) erstreckt, und wobei das erste Ende (21) des Kopplungsteils (20) ein weibliches Eingriffsmittel (23) aufweist, welches zur Aufnahme des männlichen Eingriffsmittels (12) des Bohrwerkzeugkörpers (4) eingerichtet ist,
- wenigstens ein Sicherungsmittel (30), das eingerichtet ist, um die axiale Bewegung des Bohrwerkzeugkörpers (4) bezogen auf das Kopplungsteil (20) zu verhindern, und
- Mittel zum Übertragen eines Drehmoments (40), die eingerichtet sind, um ein Drehmoment zwischen dem Kopplungsteil (20) und dem Bohrwerkzeugkörper (4) zu übertragen,
**dadurch gekennzeichnet, dass**
die Mittel zum Übertragen eines Drehmoments (40) so positioniert sind, dass sie die Befestigung des Bohrwerkzeugkörpers (4) an dem Kopplungsteil (20) in einer von insgesamt zwei verfügbaren Rotationspositionen, die um 180° beabstandet sind, ermöglichen, indem ein überstehender Flansch (11) zwischen dem männlichen Eingriffsmittel (12) an dem vorderen Ende (5) und dem Bohrwerkzeugkörper (4) ausgebildet ist, und indem das Sicherungsmittel (30) ein ringförmiges Sicherungsmittel ist, das so eingerichtet ist, dass es um den Flansch (11) des Bohrwerkzeugkörpers (4) montiert werden kann und sicher mit dem ersten Ende (21) des Kopplungsteils (20) in Eingriff treten kann, wenn das männliche Eingriffsmittel (12) in dem weiblichen Eingriffsmittel (23) aufgenommen ist.

2. Werkzeugkörperanordnung nach Anspruch 1, wobei die Mittel zum Übertragen eines Drehmoments (40) Stifte (41) aufweisen, und wobei ein erster Satz von Vertiefungen (15), die zur Aufnahme eines vorderen Endes (43) der Stifte (41) eingerichtet sind, in dem hinteren Ende (6) des Bohrwerkzeugkörpers (4) vorgesehen sind, und wobei ein zweiter Satz von Vertiefungen (27), die zur Aufnahme eines hinteren Endes (42) der Stifte (41) eingerichtet sind, in dem ersten Ende (21) des Kopplungsteils (20) vorgesehen sind.

3. Werkzeugkörperanordnung nach Anspruch 2, wobei die Stifte (41) in einem der Sätze von Vertiefungen (15, 27) fest eingepasst sind, und wobei die Stifte (41) so eingerichtet sind, dass sie in dem anderen der Sätze von Vertiefungen (15, 27) lösbar aufgenommen werden können.

4. Werkzeugkörper nach Anspruch 3, wobei die Stifte (41) in dem zweiten Satz von Vertiefungen (27) fest eingepasst sind.

5. Werkzeugkörperanordnung nach einem der Ansprüche 2 bis 4, wobei die Mittel zum Übertragen eines Drehmoments (40) wenigstens vier Stifte (41) aufweisen.

6. Werkzeugkörperanordnung nach einem der Ansprüche 2 bis 4, wobei die Mittel zur Übertragung des Drehmoments (40) vier Stifte (41) aufweisen, die gemeinsam die vier Ecken eines imaginären Rechtecks bilden.

7. Werkzeugkörperanordnung nach einem der Ansprüche 2 bis 4, wobei die Mittel zum Übertragen eines Drehmoments (40) vier Stifte aufweisen, wobei ein erstes Paar von einander gegenüberliegenden Stiften in einem ersten radialen Abstand von der zentralen Achse (C) liegt, und wobei ein zweites Paar von einander gegenüberliegenden Stiften in einem zweiten radialen Abstand von der zentralen Achse (C) liegt, wobei der zweite radiale Abstand von dem ersten radialen Abstand verschieden ist.

8. Werkzeugkörperanordnung nach einem der Ansprüche 3 bis 7, wobei der erste Satz von Vertiefungen (15) in einem peripheren Rand (16) des Flansches (11) ausgebildet sind.

9. Werkzeugkörperanordnung (1) für die spanabhebende Bearbeitung mit:
- einer Werkzeugkörperanordnung nach einem der vorangehenden Ansprüche,
- wenigstens einem peripheren Schneideinsatz (2), der in dem wenigstens einen peripheren Einsatzsitz (8) montiert ist, und
- wenigstens einem zentralen Schneideinsatz (3), der in dem wenigstens einen zentralen Einsatzsitz (9) montiert ist.

10. Maschine für die spanabhebende Bearbeitung eines rotierenden Werkstücks, wobei die Maschine folgendes aufweist:
- eine Werkzeuganordnung (1) nach Anspruch 9,
- einen Halter, der zum Halten des Kopplungsteils (20) in einer fixierten Ausrichtung eingerichtet ist, wobei der Halter bezogen auf das Werkstück wenigstens in einer längsgerichteten Fortschrittsrichtung (Z) und in einer quer verlaufenden Fortschrittsrichtung (X) beweglich ist,
wobei eine periphere Schneidkante (17) des wenigstens einen peripheren Schneideinsatzes (2) sich entlang der quer verlaufenden Fortschrittsrichtung (X) erstreckt, wenn die Werkzeuganordnung (1) an dem Halter in der fixierten Ausrichtung montiert ist.

## Revendications

1. Ensemble de corps d'outil destiné à être utilisé dans un ensemble d'outil configuré pour un usinage par enlèvement de copeaux d'une pièce d'ouvrage (50), l'ensemble de corps d'outil comprenant :
- un corps d'outil de perçage (4) présentant une extrémité avant (5) et une extrémité arrière (6) entre lesquelles un axe central (C) et une surface d'enveloppe périphérique (7) s'étendent, où au moins un siège de plaquette périphérique (8) destiné au montage d'une plaquette de coupe périphérique (2) et au moins un siège de plaquette central (9) destiné au montage d'une plaquette de coupe centrale (3) sont prévus dans l'extrémité avant (5),
- un élément d'accouplement (20) présentant une première extrémité (21) configurée pour un engagement avec l'extrémité arrière (6) du corps d'outil de perçage (4), et une seconde extrémité (22) configurée pour être fixée à un support d'une machine, où l'extrémité arrière (6) du corps d'outil de perçage (4) comprend un élément d'engagement mâle (12) s'étendant le long de l'axe central (C), et où la première extrémité (21) de l'élément d'accouplement (20) comprend un élément d'engagement femelle (23) configuré pour recevoir l'élément d'engagement mâle (12) du corps d'outil de perçage (4),
- au moins un élément de fixation (30) configuré pour empêcher un déplacement axial du corps d'outil de perçage (4) par rapport à l'élément d'accouplement (20), et
- des moyens de transfert de couple (40) configurés pour transmettre un couple entre l'élément d'accouplement (20) et le corps d'outil de perçage (4),
**caractérisé en ce que** les moyens de transfert de couple (40) sont positionnés pour permettre la fixation du corps d'outil de perçage (4) sur l'élément d'accouplement (20) dans l'une des deux positions de rotation disponibles au total séparées de 180°, **en ce qu'**une bride en saillie (11) est formée entre l'élément d'engagement mâle (12) et l'extrémité avant (5) du corps d'outil de perçage (4), et **en ce que** l'élément de fixation (30) est un élément de fixation annulaire configuré pour être monté autour de la bride (11) du corps d'outil de perçage (4) et être engagé de manière ferme avec la première extrémité (21) de l'élément d'accouplement (20) lorsque l'élément d'engagement mâle (12) est reçu dans l'élément d'engagement femelle (23).

2. Ensemble de corps d'outil selon la revendication 1, dans lequel les moyens de transfert de couple (40) comprennent des broches (41), et où un premier ensemble d'évidements (15) configurés pour recevoir une extrémité avant (43) des broches (41) sont prévus dans l'extrémité arrière (6) du corps d'outil de perçage (4) et où un second ensemble d'évidements (27) configurés pour recevoir une extrémité arrière (42) des broches (41) sont prévus dans la première extrémité (21) de l'élément d'accouplement (20).

3. Ensemble de corps d'outil selon la revendication 2, dans lequel les broches (41) sont montées de manière fixe dans l'un des ensembles d'évidements (15, 27) et où les broches (41) sont configurées pour être reçues de manière amovible dans l'autre des ensembles d'évidements (15, 27).

4. Ensemble de corps d'outil selon la revendication 3, dans lequel les broches (41) sont montées de manière fixe dans le second ensemble d'évidements (27).

5. Ensemble de corps d'outil selon l'une quelconque des revendications 2 à 4, dans lequel les moyens de transfert de couple (40) comprennent au moins quatre broches (41).

6. Ensemble de corps d'outil selon l'une quelconque des revendications 2 à 4, dans lequel les moyens de transfert de couple (40) comprennent quatre broches (41) qui forment ensemble les quatre coins d'un rectangle imaginaire.

7. Ensemble de corps d'outil selon l'une quelconque des revendications 2 à 4, dans lequel les moyens de transfert de couple (40) comprennent quatre broches, où une première paire de broches opposées sont situées à une première distance radiale de l'axe central (C) et où une seconde paire de broches opposées sont situées à une seconde distance radiale de l'axe central (C), où la seconde distance radiale est différente de la première distance radiale.

8. Ensemble de corps d'outil selon l'une quelconque des revendications 3 à 7, dans lequel le premier ensemble d'évidements (15) sont formés dans une couronne périphérique (16) de la bride (11).

9. Ensemble d'outil (1) destiné à un usinage par enlèvement de copeaux, comprenant :
- un ensemble de corps d'outil selon l'une quelconque des revendications précédentes,
- au moins une plaquette de coupe périphérique (2) montée dans le au moins un siège de plaquette périphérique (8), et
- au moins une plaquette de coupe centrale (3) montée dans le au moins un siège de plaquette central (9).

10. Machine destinée à un usinage par enlèvement de copeaux d'une pièce d'ouvrage en rotation, où la machine comprend :
- un ensemble d'outil (1) selon la revendication 9,
- un support configuré pour maintenir l'élément d'accouplement (20) dans une orientation fixe, où le support peut être déplacé par rapport à la pièce d'ouvrage au moins selon une direction d'avance longitudinale (Z) et selon une direction d'avance transversale (X),
où, lorsque l'ensemble d'outil (1) est monté sur le support dans l'orientation fixe, une arête de coupe périphérique (17) de la au moins une plaquette de coupe périphérique (2) s'étend le long de la direction d'avance transversale (X).
